# EUROPÄISCHE PATENTSCHRIFT

(11) **EP 3 110 683 B1**
(45) Veröffentlichungstag und Bekanntmachung des Hinweises auf die Patenterteilung: **29.12.2021**
(21) Anmeldenummer: 15708766.9
(22) Anmeldetag: 25.02.2015
(51) Int. Cl.: B62D 65/02, B62D 65/18

(54) **WECHSELVORRICHTUNG UND WECHSELVERFAHREN FÜR KAROSSERIETEILE TRAGENDE SPANNRAHMEN ZWISCHEN EINER SPANNRAHMEN TRANSPORTVORRICHTUNG UND EINEM RAHMEN FÖRDERER ÜBER SPANNRAHMEN MAGAZINEN**
INTERCHANGING APPARATUS AND INTERCHANGING METHOD
DISPOSITIF ET PROCÉDÉ DE CHANGEMENT DE CADRES DE SERRAGE PORTANT DES PIÈCES DE CARROSSERIE ENTRE UN DISPOSITIF DE TRANSPORT DE CADRES DE SERRAGE ET UN CONVOYEUR DE CADRES PAR L'INTERMÉDIAIRE DE MAGASINS À CADRES DE SERRAGE

(30) Priorität: 25.02.2014 DE 202014100850 U
(43) Veröffentlichungstag der Anmeldung: 04.01.2017
(73) Patentinhaber: KUKA Systems GmbH, 86165 Augsburg (DE)
(72) Erfinder: BROCKHOFF, Per-Olaf, 86316 Friedberg (DE); JAKOB, Marius, 86179 Augsburg (DE)
(74) Vertreter: Ernicke, Klaus Stefan
(86) Internationale Anmeldenummer: PCT/EP2015/053880
(87) Internationale Veröffentlichungsnummer: WO 2015/128342

(56) Entgegenhaltungen:
- EP-A1- 1 858 750
- EP-A1- 1 858 750
- EP-A1- 2 279 929
- EP-A2- 1 352 818
- WO-A1-92/19486
- WO-A1-2014/026475
- US-A1- 2004 056 497

## Beschreibung

Die Erfindung betrifft eine Wechselvorrichtung und ein Wechselverfahren für Spannrahmen mit den Merkmalen im Oberbegriff des Verfahrens- und Vorrichtungshauptanspruchs.

Ein solche Wechselvorrichtung für Spannrahmen an einer Fügestation von Karosserieteilen ist aus der WO 2014/026475 A bekannt. Die Wechselvorrichtung weist trommelartige Rahmenmagazinen und einen Rahmenförderer für den Transport der Spannrahmen zwischen den Rahmenmagazinen und einer Arbeitsstelle der Bearbeitungsstation sowie einen weiteren Rahmentransporter auf, der ebenfalls mit den vom Rahmenförderer bedienten Rahmenmagazinen verbunden ist. Die Spannrahmen sind mit ihren Laufwerken lose und rollfähig an Schienenstücken der Rahmenmagazine gehalten.

Die EP 1 858 750 B1 zeigt eine andere Wechselvorrichtung an einer Fügestation für Karosserieteile, die mehrere gesteuert drehbare Rahmenmagazine mit aufrechter Drehachse und nur einen Rahmenförderer aufweist, der die Spannrahmen zwischen den Magazinen und zu einer Arbeitsstelle der Fügestation transportiert.

Es ist Aufgabe der vorliegenden Erfindung, eine weiterverbesserte Spannrahmenlogistik aufzuzeigen.

Die Erfindung löst diese Aufgabe mit den Merkmalen im Verfahrens- und Vorrichtungshauptanspruch.

Die beanspruchte Wechseltechnik, insbesondere die Wechselvorrichtung und das Wechselverfahren, bieten eine gesteigerte Flexiblität für den Einsatz und den Wechsel von unterschiedlichen, typspezifischen Spannrahmen. Zudem können bei einem Wechsel des Karosserietyps und der jeweiligen Karosserieteile die Spannrahmen schnell ausgetauscht werden. Ferner kann die Zahl der verfügbaren unterschiedlichen Spannrahmen bzw. Spannrahmentypen gesteigert werden. Trotz erhöhter Spannrahmenzahl ist dabei eine kurzeitige Verfügbarkeit des jeweils benötigten Spannrahmens gewährleistet.

Die Spannrahmen werden in mehreren Rahmenmagazinen temporär gespeichert, in denen sie gesichert aufgenommen werden können. Dies ist bei einer liegenden Rahmenaufnahme in einem Trommelmagazin von Vorteil und kann auch für eine Eigenstabilität des Spannrahmens und seiner Komponenten sowie eine Identifizierbarkeit sorgen. Die gesicherte Aufnahme wird durch eine gesteuerte Verriegelungseinrichtung und eine Medienkupplung erreicht. Die Verriegelungseinrichtung fixiert den jeweiligen Spannrahmen in der Aufnahmeposition und gibt ihn für den Rahmenwechsel wieder frei. Mittels der Verriegelungseinrichtung wird außerdem die Medienkupplung automatisch geöffnet oder geschlossen. Mittels der Medienkupplung können Betriebsmittel, insbesondere Fluide, und Daten zwischen dem Rahmenmagazin und dem jeweiligen Spannrahmen übertragen werden.

Der Rahmenförderer und der zugeordnete Rahmentransporter bieten mehrere parallele Verbindungsmöglichkeiten für die zugehörigen Rahmenmagazine. Der Rahmenförderer verbindet die Rahmenmagazine mit der Arbeitsstelle. Er kann auch beim Rahmenwechsel zwei Spannrahmen gleichzeitig transportieren. Er kann dabei den bisherigen Spannrahmen abführen und den neuen Spannrahmen zuführen. Der bevorzugt parallel zugeordnete Rahmentransporter erlaubt unabhängig vom Rahmenförderer einen Wechsel von Spannrahmen zwischen verschiedenen Rahmenmagazinen. Hierdurch kann ein Rückfluss, insbesondere ein Kreislauf, der Spannrahmen zwischen den Rahmenmagazinen erreicht werden.

Der Förderbetrieb des Rahmentransporters kann unabhängig und zeitgleich mit dem Förderbetrieb des Rahmenförderers stattfinden. Hierdurch können einerseits Magazinüberfüllungen vermieden werden. Andererseits können auf einfache Weise leere Magazinplätze gebildet werden, die für einen vom Rahmenförderer durchgeführten Spannrahmenwechsel nützlich oder erforderlich sind. Im Weiteren können auch unnötige Leerfahrten des Rahmenförderers vermieden werden.

Der Parallelbetrieb von Rahmenförderer und Rahmentransporter verkürzt signifikant die Wechselzeiten für einen Spannrahmen. Nützlich ist hierfür eine gerade Zahl von Magazinplätzen an den Rahmenmagazinen.

Ein weiterer Vorteil ist die Generierung zusätzlicher, zumindest temporärer Speicherplätze für Spannrahmen. Auf der Förderbahn des Rahmentransporters kann z.B. mindestens ein solcher temporärer Speicherplatz zwischen den Rahmenmagazinen gebildet werden. Ferner können auch auf andere Weise neben den Rahmenmagazinen zusätzliche Speicherplätze generiert werden. Dies ist insbesondere durch eine über ein Rahmenmagazin hinaus verlängerte Förderbahn des Rahmentransporters möglich.

Vorteilhafterweise werden die Spannrahmen beim Transport an einer Führungsbahn mit einer einzelnen Schiene kippsicher geführt. Das Fördermittel, bevorzugt ein Schleppholm, wird parallel dazu und getrennt geführt. Dies spart Platz sowie Bauaufwand und bietet eine vereinfachte, hochflexible, extrem schnelle sowie kostengünstige Fördertechnik.

An der Arbeitsstelle können die Spannrahmen von einer Zustellvorrichtung zugestellt und mit einer Positioniereinrichtung an einem Gestell in allen drei Raumrichtungen x, y, z bzw. Raumachsen exakt stationär positioniert und fixiert werden. Eine Positionierung durch mehrere Rollböcke und ein Schwert ist besonders effektiv sowie betriebssicher und bietet auch unter schwierigen Umgebungs- und Prozessbedingungen, insbesondere beim Schweißen, eine zuverlässige und exakte Positionierung mit hoher Wiederholgenauigkeit.

Mittels einer Ausschleuseinrichtung der Wechselvorrichtung können bedarfsweise Spannrahmen aus der Bearbeitungsstation entnommen und zugeführt werden. Dies ist z.B. für Wartungszwecke oder für eine schnelle Umrüstung von Vorteil.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine perspektivische Ansicht einer Bearbeitungsstation mit einer Wechselvorrichtung,
- Figur 2:: eine Draufsicht auf die Bearbeitungsstation gemäß Pfeil II von Figur 1,
- Figur 3:: eine Seitenansicht der Bearbeitungsstation gemäß Pfeil III von Figur 1,
- Figur 4:: eine Stirnansicht der Bearbeitungsstation gemäß Pfeil IV von Figur 1,
- Figur 5:: eine andere perspektivische Ansicht der Bearbeitungsstation von Figur 1 bis 4,
- Figur 6:: eine abgebrochene und vergrößerte Detaildarstellung von Figur 3,
- Figur 7:: eine abgebrochene, abstrahierte und vergrößerte Detaildarstellung von Figur 1,
- Figur 8:: eine weiter vergrößerte Detaildarstellung von Figur 7,
- Figur 9:: eine vergrößerte Draufsicht der Arbeitsstelle gemäß Figur 2,
- Figur 10:: eine perspektivische Ansicht der Arbeitsstelle gemäß Figur 9,
- Figur 11:: eine Variante der Wechselvorrichtung von Figur 1 bis 10 in Draufsicht,
- Figur 12:: eine perspektivische und einseitig abstrahierte Ansicht der Variante von Figur 11,
- Figur 13:: eine vergrößerte perspektivische Detaildarstellung zu Figur 12 und
- Figur 14:: eine vergrößerte perspektivische Detaildarstellung eines Rahmenmagazins gemäß Figur 11 bis 13.

Die Erfindung betrifft eine Wechselvorrichtung (14) für Spannrahmen (6-9) und ein Wechselverfahren. Die Erfindung betrifft ferner eine mit einer solchen Wechselvorrichtung (14) ausgestattete Bearbeitungsstation (2) und im Weiteren auch eine mit einer oder mehreren solcher, ggf. verketteter Bearbeitungsstationen (2) ausgestattete Bearbeitungsanlage (1).

Die Bearbeitungsstation (2) ist bevorzugt als Fügestation, insbesondere als sogenannte Geostation oder Framingstation für das Fügen von Werkstücken (4) ausgebildet. Die Werkstücke (4) sind bevorzugt als Karosserieteile, insbesondere Blechteile, einer Fahrzeugrohkarosserie ausgebildet. Es kann sich z.B. um eine Bodengruppe und linke und rechte Seitenwände handeln, die in der Fügestation (2) in eine vorgegebene Relativlage zueinander gebracht, in dieser Lage gespannt und dann gefügt werden, z.B. durch Schweißen. In der Geostation (2) kann der Karosserieteilverbund zunächst geheftet und in einer nachfolgenden weiteren Fügestation ausgeschweißt werden. Diese kann entsprechend der Geostation ausgebildet sein. Die Karosserieteile (4) werden auf einer Transferlinie (5) der Fügestation (2) zugeführt, wobei sie selbsttragend oder mittels einer Palette oder eines anderen Trägers auf einem Förderer, z.B. einem Hubshuttle, einem Skidförderer oder dgl. entlang der Transferlinie (5) transportiert werden. Die Transferlinie (5) kann eine Reihe von Stationen (2) verketten.

Die Karosserieteile (4), insbesondere die Bodengruppe und die Seitenwände können z.B. in einer vorpositionierten und lose vorgefügten, insbesondere geklammerten Zuordnung zugeführt werden. In einer anderen Variante kann eine Bodengruppe auf der Transferlinie (5) zugeführt werden, wobei die Seitenwände getrennt davon an der Fügestation (2) zugeführt werden.

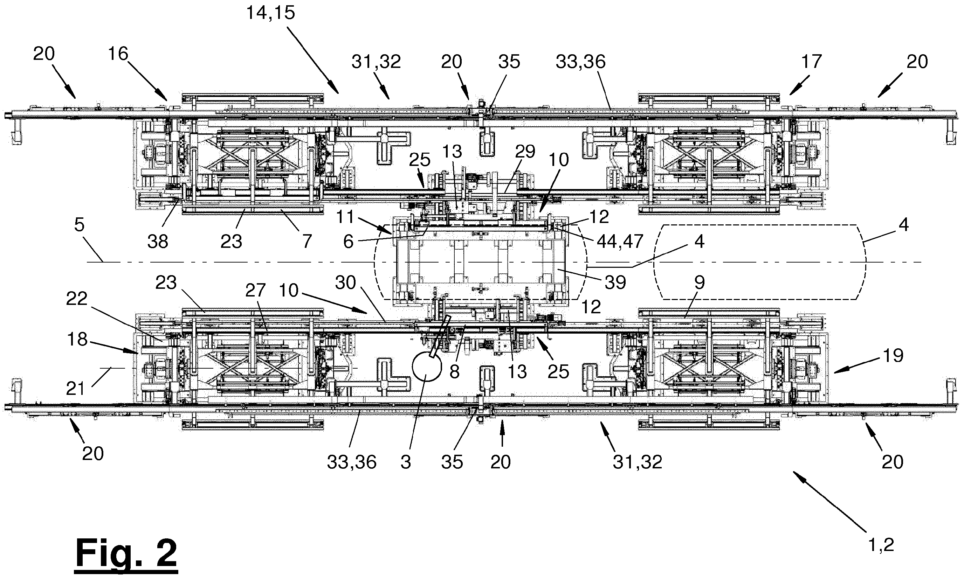

Die Fügestation (2) weist eine Arbeitsstelle (10) auf, an der ein oder mehrere Bearbeitungsvorrichtungen (3) für die Durchführung des Bearbeitungsprozesses angeordnet sind. Sie sind beidseits der Transferlinie (5) angeordnet und bevorzugt als Industrieroboter mit einem geeigneten Fügewerkzeug, z.B. einem Schweißwerkzeug, ausgebildet. In Figur 2 ist ein Industrieroboter bzw. Schweißroboter (3) schematisch angedeutet. Je nach Art des Bearbeitungsprozesses können die Industrieroboter auch andere Werkzeuge tragen.

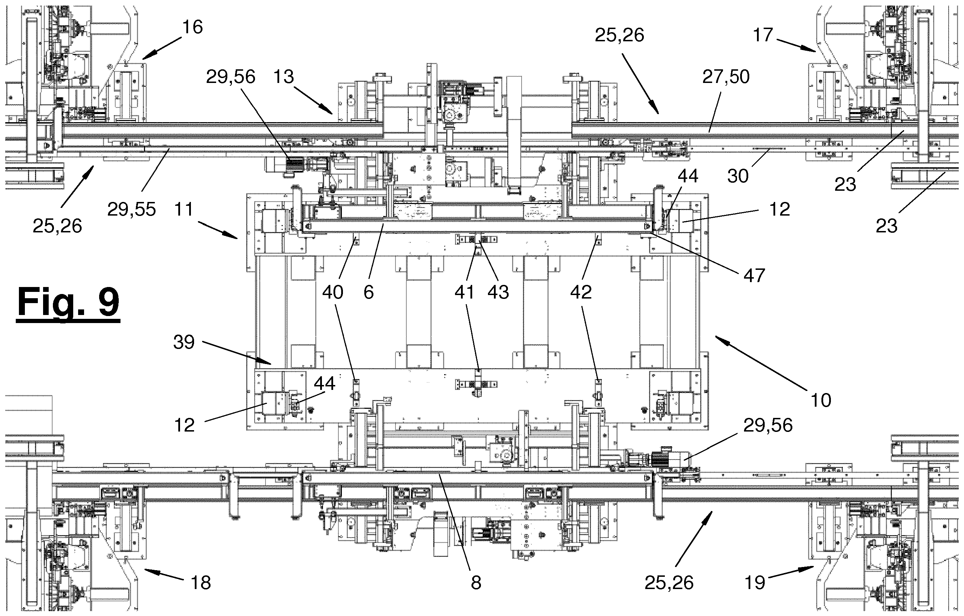

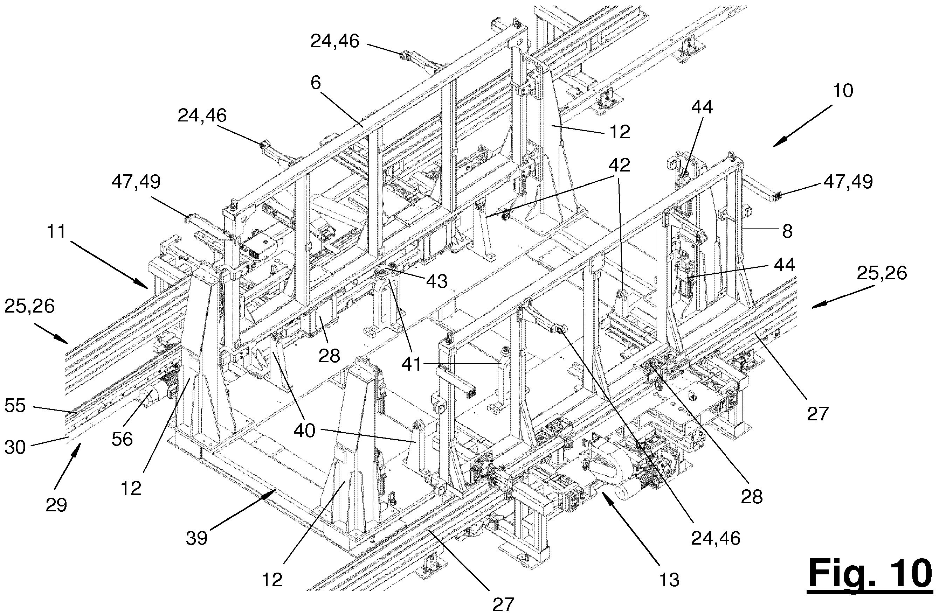

Die Karosserieteile (4) und/oder ihr Träger werden an der Arbeitsstelle (10) mittels eines in Figur 2, 9 und 10 schematisch angedeuteten Vorpositionierers (39) in eine exakte, vorgegebene Stellung gebracht.

Das Positionieren, gegenseitige Ausrichten und Spannen der zu fügenden Karosserieteile (4) wird mittels Spannrahmen (6-9) durchgeführt, die mittels einer Zustellvorrichtung (13) an der Arbeitsstelle (10) beidseits an die Transferlinie (5) und die dort befindlichen Karosserieteile (4) zugestellt werden. Von den Spannrahmen (6-9) können ggf. auch Karosserieteile (4) an die Arbeitsstelle (10) zugeführt werden.

Die Spannrahmen (6-9) bestehen aus einem platten- oder rahmenförmigen Träger und daran angeordneten Spannmitteln sowie Positionier- und Stützmitteln für die Karosserieteile (4). Außerdem können weitere Komponenten, wie z.B. Hilfswerkzeuge etc. angebaut werden. Ein Spannrahmen (6-9) kann in geeigneter Weise mit Betriebsmitteln oder Medien versorgt werden. Dies können elektrische Signal- und Leistungsströme, Fluide, insbesondere Druckluft, Kühlmittel, Hydrauliköl oder dgl. sein. Die Spann-, Positionier- und Stützmittel können z.B. elektromechanisch oder fluidisch, insbesondere pneumatisch, betätigt und bewegt werden.

Die Spannrahmen (6-9) werden an der Arbeitsstelle (10) beidseits der Transferlinie (5) exakt positioniert und stationär aufgenommen. Hierfür weist die Fügestation (2) gemäß Figur 2, 9 und 10 ein Gestell (12) mit z.B. mehreren, insbesondere vier, aufrechten Eckpfosten auf, an denen die Spannrahmen (6-9) mittels einer Positioniereinrichtung (11) in vorgegebener Lage und in Spannposition relativ zu den Karosserieteilen (4) aufgenommen und fixiert werden. Hierbei kann auch eine Medienversorgung mittels geeigneter Medienkupplungen (47) stattfinden.

Die Positioniereinrichtung (11) ist auf einer oder beiden Seiten der Transferlinie (5) angeordnet. Sie wirkt mit der jeweiligen Zustellvorrichtung (13) bei deren Zustellbewegung bzw. Quervorschub zusammen. In der Darstellung von Figur 2, 9 und 10 befindet sich der eine Spannrahmen (6) in der Spannposition an der Arbeitsstelle (10). Der andere Spannrahmen (8) nimmt eine Warteposition vor dem Quervorschub ein.

Wie Figur 2, 9 und 10 verdeutlichen, weist die Positioniereinrichtung (11) mehrere Positionierelemente (40,41,42) auf, die den Spannrahmen (6-9) aufnehmen, abstützen und in den drei Raumrichtungen x, y und z exakt positionieren. Am Gestell (12), insbesondere an den Eckpfosten, sind steuerbare Fixiermittel (44), z.B. Spanner, angeordnet, die den Spannrahmen (6-9) in der eingenommenen exakten Position festhalten und auch gegen Bearbeitungs- und Reaktionskräfte abstützen.

Die Positionierelemente (40,41,42) sind z.B. jeweils als drei längs der Transferlinie (5) aufgereihte flurgebundene Rollenböcke ausgebildet, auf denen der Spannrahmen (6-9) beim besagten Quervorschub aufgleitet und mittels der Rollen positioniert wird. Die beiden äußeren Rollenböcke (40,42) positionieren ihn dabei mit aufrechten Rollen in der vertikalen z-Richtung. Das liegende Rollenpaar des mittleren Rollenbocks (41) positioniert mit einer Anschlagfunktion quer zur Transferlinie (5) in der y-Richtung. Ein am Spannrahmen (6-9) angeordnetes Positionierelement (43), z.B. ein Schwert, greift beim Quervorschub zwischen die Rollen des Paars, wodurch der Spannrahmen (6-9) in der x-Richtung längs der Transferlinie (5) positioniert wird. Alternativ können die Positionierelemente (40,41,42) als Gleitböcke oder in anderer Weise ausgebildet sein.

Die Ausbildung der Spannrahmen (6-9) und der anderen vorgenannten Stationskomponenten für die Durchführung des Bearbeitungsprozesses, insbesondere Fügeprozesses, können andererseits die gleichen wie in der EP 1 858 750 B1 sein.

In der Bearbeitungsstation (2), insbesondere Fügestation ist eine Wechselvorrichtung (14) für die Spannrahmen (6-9) angeordnet. In der Bearbeitungsanlage (1) und der Bearbeitungsstation (2) können verschiedene Karosserieteile (4) in einem freien Mix zugeführt und bearbeitet werden. Die Unterschiede können verschiedene Karosserietypen einer Fahrzeugbaureihe, z.B. Karosserien für eine Limousine, ein Cabriolet oder dergleichen betreffen. Dementsprechend ändern sich die Seitenwände (4) und damit die hierauf adaptierten Spannrahmen (6-9). Bei einem Typwechsel werden auch die Spannrahmen (6-9) getauscht.

Die Wechselvorrichtung (14) weist eine Speichereinrichtung (15) für die verschiedenen Spannrahmen (6-9) und einen Rahmenförderer (25) sowie einen Rahmentransporter (31) auf. Die Speichereinrichtung (15) weist mehrere gesteuert bewegliche Rahmenmagazine (16-19) auf, wobei an jedem Rahmenmagazin (16-19) mehrere Spannrahmen (6-9) lösbar angeordnet sind.

In den gezeigten Ausführungsbeispielen sind die Rahmenmagazine (16-19) für die Spannrahmen (6-9) beidseits der Transferlinie (5) angeordnet. Dies kann eine mittensymmetrische Anordnung bezüglich der zentralen Transferlinie (5) sein.

Die Wechselvorrichtung (14) weist eine nicht dargestellte Steuerung auf, an welche die Rahmenmagazine (16-19) und die Fördereinrichtungen (25,31) sowie die Zustellvorrichtungen (13) nebst Positioniereinrichtungen (11) und ggf. weitere nachgenannte steuerbare Komponenten angeschlossen sind. Diese Steuerung kann an eine übergeordnete Stationssteuerung angeschlossen oder in diese integriert sein.

Die Rahmenmagazine (16,17 und 18,19) sind jeweils in Transferrichtung (5) gesehen mit gegenseitigem Abstand und zu beiden Seiten der Arbeitsstelle (10) angeordnet. Die gezeigte Speichereinrichtung (15) hat vier Rahmenmagazine (16-19) in verteilter Anordnung. Sie kann außerdem einen oder mehrere zusätzliche Speicherplätze (20) für einen oder mehrere Spannrahmen (6,9) aufweisen. Hierauf wird später noch näher eingegangen.

Die Rahmenmagazine (16-19) sind in den gezeigten Ausführungsbeispielen als Trommelmagazine ausgebildet, die um eine liegende bzw. horizontale Drehachse (21) drehbar an einem Magazingestell (22) angeordnet sind. Die Rahmenmagazine (16-19) haben mehrere Magazinplätze für die Aufnahme jeweils eines Spannrahmens (6-9). Die Drehachse (21), die Magazinplätze und die Rahmenaufnahmen sind bevorzugt längs der Transferlinie (5) ausgerichtet. Vorzugsweise ist die Zahl der Magazinplätze gerade. In den gezeigten Ausführungsbeispielen sind jeweils vier Magazinplätze vorhanden.

Der Rahmenförderer (25) ist für den Transport der Spannrahmen (6-9) zwischen den jeweils zugeordneten Rahmenmagazinen (16-19) und der Arbeitsstelle (10) vorgesehen. Der Rahmenförderer (25) ist dabei zwischen den entlang der Transferlinie (5) angeordneten und aufgereihten Rahmenmagazinen (16,17 und 18,19) und der Transferlinie (5) angeordnet. Er ist dabei auch neben dem Stationsgestell (12) angeordnet, z.B. mit seitlichem Abstand. Die Förderrichtung des Rahmenförderers (25) ist ebenfalls entlang der Transferlinie (5), insbesondere parallel dazu ausgerichtet. Die besagte Anordnung ist einseitig oder beidseits der Transferlinie (5) vorhanden und parallel dazu ausgerichtet.

Der Rahmenförderer (25) weist eine Förderbahn (26) und ein angetriebenes sowie steuerbares Fördermittel (29) auf. Die Förderbahn (26) kann mehrteilig sein. Sie kann dabei Führungsmittel (27,28) für die eigenständige Abstützung und Führung der Spannrahmen (6-9) sowie ggf. eine getrennte Führungsbahn (30) für das Fördermittel (29) aufweisen. Die Führungsmittel (27,28) können z.B. als stationäre Schienenanordnung (27) und als jeweils an einem Spannrahmen (6-9) angeordnetes gleitendes oder rollendes Laufwerk (28) ausgebildet sein. Die Zuordnung und Kinematik kann auch umgekehrt sein. Die Führungsbahn (30) kann ebenfalls als Schienenführung ausgebildet sein.

Der Rahmenförderer (25) kann einen neuen Spannrahmen (6,8) von einem Rahmenmagazin (16-19) oder einem Speicherplatz (20) abholen, an den Bereich der Arbeitsstelle (10) zuführen und im Wechsel einen bisher benutzten Spannrahmen (6,8) übernehmen sowie dem gleichen oder bevorzugt einem anderen Rahmenmagazin (16-19) oder Speicherplatz (20) zuführen. Der Rahmenförderer (25) kann hierfür ggf. zumindest temporär mehrere Spannrahmen (6-9) zugleich bewegen.

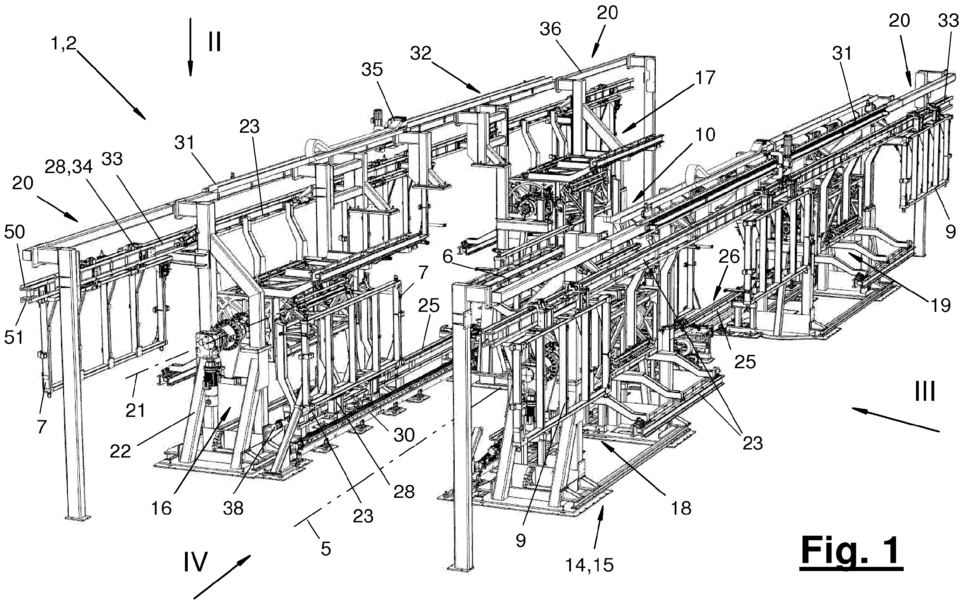

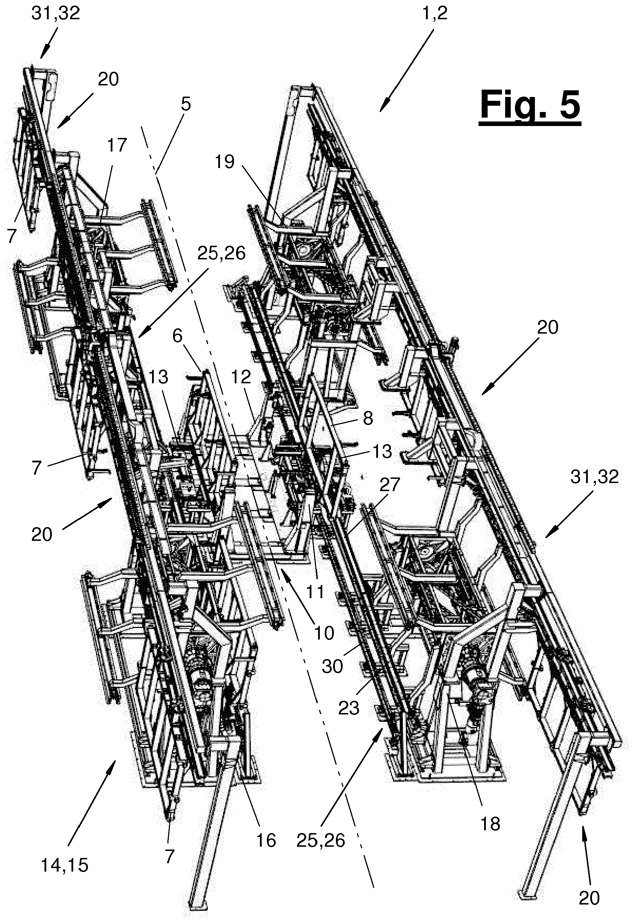

Ein Rahmenförderer (25) kann ein oder mehrere Fördermittel (29) aufweisen. Der in Figur 1, 5 und 7 gezeigte Rahmenförderer (25) besitzt ein einzelnes Fördermittel (29) mit einem Holm (55), insbesondere Schleppholm, der an oder auf der Führungsbahn (30) geführt und von einem steuerbaren, bevorzugt stationären Antrieb (56) reversierend angetrieben ist. Der Antrieb (56) weist z.B. einen Elektromotor auf, der über einen Zahnstangentrieb oder dgl. den Holm (55) vorwärts und rückwärts bewegt. Die Führungsbahn (30) ist z.B. als stationäre Schiene ausgebildet, auf oder an welcher der z.B. im Querschnitt U-förmige Holm (55) mittels Roll- oder Gleitmitteln reibungsarm geführt ist.

Der Holm (55) ragt über etwas mehr als die halbe Länge der Station (2) und trägt eine Kupplungseinrichtung (37) für zwei Spannrahmen (6-9). Diese besteht z.B. aus zwei axial distanzierten, steuerbaren Mitnehmern (57), die mit einem Spannrahmen (6-9) in der Warteposition an der Arbeitsstelle (10) und mit einem anderen zum Wechsel bereit stehenden Spannrahmen (6-9) in einem Rahmenmagazin (16-19) in Schleppeingriff treten können.

Mit einer einzigen Fahrbewegung des Schleppholms (55) kann dadurch beim Spannrahmenwechsel der nicht mehr benötigte Spannrahmen (6-9) von der Warteposition in ein Rahmenmagazin (16-19) geschafft und eine neuer Spannrahmen (6-9) aus einem anderen Rahmenmagazin (16-19) in die Warteposition an der Arbeitsstelle (10) gebracht werden. Ein Spannrahmenwechsel ist dabei in beiden Richtungen längs der Transferlinie (5) möglich, wobei die Wechselrichtung frei gewählt werden kann.

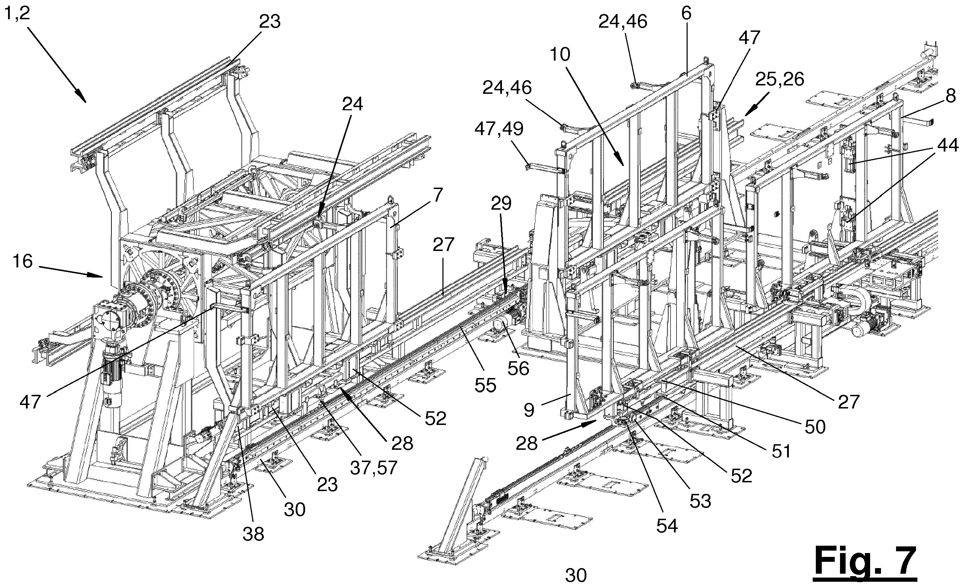

Figur 7 zeigt diese Eingriffstellung mit den Spannrahmen (8,9) auf der rechten Stationsseite vor dem Förderhub des Holms (55), bei dem dann der zu wechselnde Spannrahmen (8) in das Rahmenmagazin (19) gebracht und ein neuer Spannrahmen (9) aus dem Rahmenmagazin (17) zugeführt wird. Die Rahmenmagazine (17,19) sind aus Gründen der Übersichtlichkeit nicht dargestellt.

Bei einer alternativen Mehrfachanordnung von Fördermitteln (29) sind z.B. zwei Fördermittel (29) vorhanden, die eigenständig angetrieben und gesteuert sind sowie getrennt voneinander auf einer bevorzugt gemeinsamen Führungsbahn (30) fahren können. Das oder die Fördermittel (29) können z.B. als Schleppwagen ausgebildet sein.

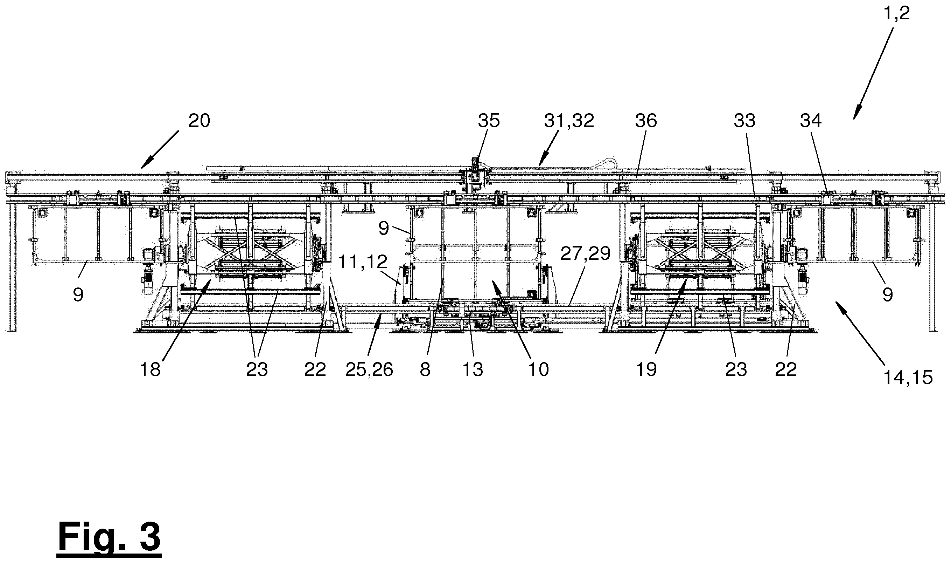

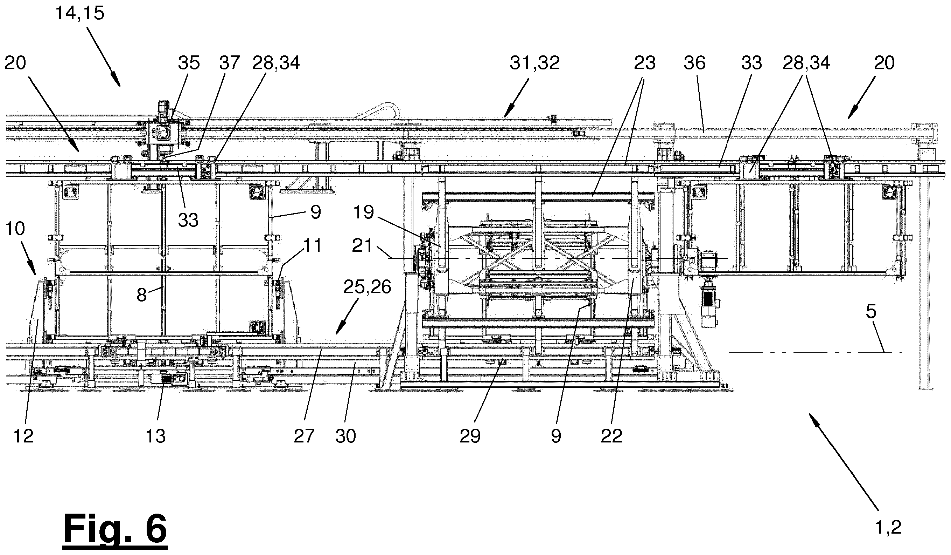

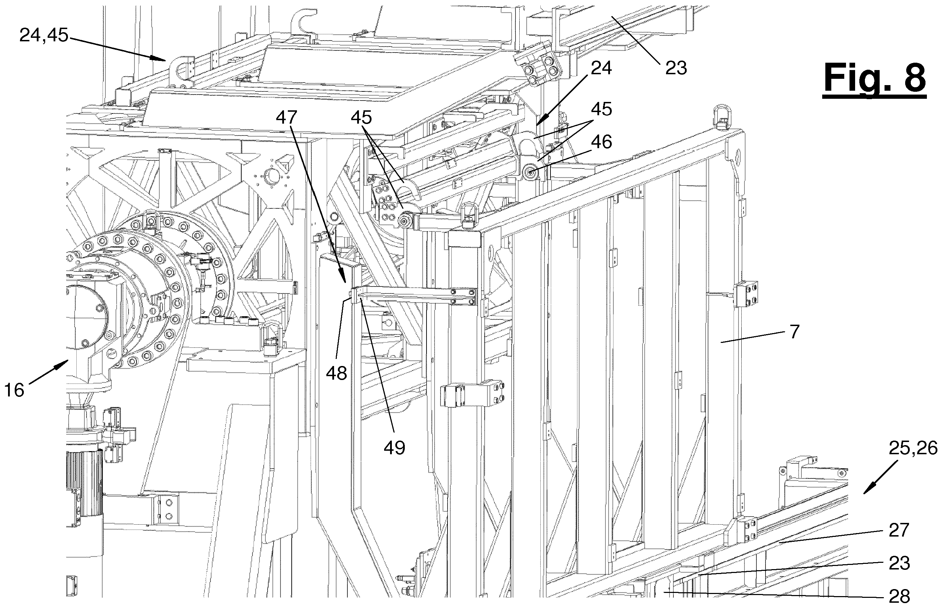

Die in Figur 1 bis 10 gezeigte Förderbahn (26) weist eine einzelne Schiene (27) für den geführten stehenden Transport der Spannrahmen (6-9) auf. Die Schiene (27) besitzt obere und untere bevorzugt U-förmige Führungsspuren (50,51), in oder an denen jeweils vertikale und horizontale Stützrollen (53,54) des Laufwerks (28) laufen. Das Laufwerk (28) besitzt zwei oder mehr vom Spannrahmen (6-9) abstehende Stützarme (52), welche die Schiene (27) gabelartig seitlich umgreifen und obere und untere Paarungen von Stützrollen (53,54) tragen. Diese Spuren- und Rollenanordnung ermöglicht eine platzsparende und kippsichere Spannrahmenführung. Alternativ können die zwei oder mehr Führungsspuren (50,51) in anderer Weise ausgebildet und/oder angeordnet sein, z.B. seitlich oder über Eck.

Für den Quertransport der Spannrahmen (6-9) vom Rahmenförderer (25) zum Stationsgestell (12) sowie der dortigen Arbeitsstelle (10) und zurück ist eine steuerbare und angetriebene Zustellvorrichtung (13) vorgesehen. Sie nimmt einen Spannrahmen (6,8) vom Rahmenförderer (25) ab und transportiert ihn zum Stationsgestell (12) sowie der dortigen Positioniereinrichtung (11). Die Zustellvorrichtung (13) bringt zuvor den bisher benutzten Spannrahmen (6,8) zurück zum Rahmenförderer (25). Dieser kann den gewechselten Spannrahmen (6,8) dann weiter zum anderen Rahmenmagazin transportieren.

Wie Figur 2, 4, 9 und 10 verdeutlichen, weist die Zustellvorrichtung (13) einen quer zur Transferlinie (5) verfahrbaren Schlitten mit einem steuerbaren Antrieb und mit einem Bahn- oder Schienenstück zur Aufnahme eines stehenden Spannrahmens (6-9) mit seinem Laufwerk (28) auf. Das bevorzugt einzelne Bahn- oder Schienenstück kann in eine Lücke der Schiene (27) eingepasst werden. Es hat ausreichend Führungsspiel für die Stützrollen (53,54), um die Positionierbewegung an der Positioniereinrichtung (11) und ihren Positionierelementen (40-43) zu ermöglichen.

Die Wechselvorrichtung (14) weist den genannten weiteren Rahmentransporter (31) auf, der ebenfalls mit den vom Rahmenförderer (25) bedienten Rahmenmagazinen (16-19) verbunden ist. In der gezeigten Ausführungsform der Wechselvorrichtung (14) ist beidseits der Transferlinie (5) jeweils ein Rahmentransporter (31) angeordnet. Der eine Rahmentransporter (31) ist mit den Rahmenmagazinen (16,17) auf der einen Seite der Transferlinie (5) verbunden. Auf der anderen Seite ist der Rahmentransporter (31) mit den Rahmenmagazinen (18,19) verbunden.

Der Rahmenförderer (25) und der jeweils zugeordnete Rahmentransporter (31) sind an unterschiedlichen Seiten der gemeinsam bedienten Rahmenmagazine (16-19) angeordnet. Der Rahmenförderer (25) befindet sich z.B. an der zur Transferlinie (5) weisenden Vorderseite und der Rahmentransporter (31) an der gegenüberliegenden Rückseite der jeweiligen Rahmenmagazine (16-19). Der Rahmentransporter (31) kann alternativ an der Oberseite oder der Unterseite der jeweiligen Rahmenmagazine (16-19) angeordnet sein. In weiterer Abwandlung können mehrere Rahmentransporter (31) einer Magazinreihe und einem Rahmenförderer (25) zugeordnet sein.

Der Rahmentransporter (31) weist ebenfalls eine Förderbahn (32) und ein angetriebenes, steuerbares Fördermittel (35) auf. Die Förderbahn (32) erstreckt sich entlang der Transferlinie (5). Sie kann ebenfalls mehrteilig sein, indem sie eigenständige Führungsmittel (33,34) für die Spannrahmen (6-9) und eine Führungsbahn (36) für das Fördermittel (35) aufweist. Die Führungsmittel (33,34) können als Schienenanordnung und als Laufwerk für die Spannrahmen (6-9) ausgebildet sein. Als Laufwerk (34) kann ggf. das vorhandene Laufwerk (28) vom Rahmenförderer (25) oder ein zusätzliches Laufwerk benutzt werden, das evtl. anders ausgebildet und an anderer Spannrahmenstelle angeordnet ist. Die Führungsbahn (36) kann als Schienenführung und ggf. in der vorbeschriebenen Art mit Führungsspuren (50,51) gestaltet sein. Das steuerbare Fördermittel (35) ist z.B. als Schleppwagen ausgebildet. Es kann einzeln oder mehrfach vorhanden sein, wobei z.B. ein oder zwei Schleppwagen auf der Führungsbahn (36) verkehren.

Die Fördermittel (29,35) können jeweils eine steuerbare Kupplungseinrichtung (37) zum An- und Abkuppeln von einem oder mehreren Spannrahmen (6-9) aufweisen. Die Kupplungseinrichtung (37) arbeitet vorzugsweise mit Formschluss. Beim Schleppholm (55) wird die Kupplungseinrichtung (37) von den beiden Mitnehmern (57) gebildet. Durch die getrennte Führung von Spannrahmen (6-9) und Fördermitteln (29,35) können sich letztere unabhängig von den Spannrahmen (6-9) entlang ihrer jeweiligen Förderbahn (26,32) bzw. Führungsbahn (30,36) bewegen.

Der oder die Rahmenförderer (25) und der oder die Rahmentransporter (31) können konstruktiv in ähnlicher Weise ausgebildet sein. Sie können sich alternativ unterscheiden. Am Ende der Beschreibung sind hierzu konstruktive Abwandlungsmöglichkeiten angegeben.

Die Förderbahnen (26,32) des Rahmenförderers (25) und des jeweils zugeordneten Rahmentransporters (31) sind in unterschiedlicher Höhe an ein Rahmenmagazin (16-19) angebunden. Die Förderbahn (26) ist z.B. an der Unterseite der Rahmenmagazine (16-19) und die Förderbahn (32) an der Oberseite der Rahmenmagazine (16-19) angebunden. Dies ist besonders vorteilhaft bei der gezeigten Magazinausbildung als liegend angeordnete Trommelmagazine.

Der Rahmenförderer (25) ist bei dem gezeigten und bevorzugten Ausführungsbeispielen als bodenseitiger Förderer ausgebildet, wobei die Spannrahmen (6-9) auf der Förderbahn (26) stehend transportiert werden und dort oder an der Oberseite in geeigneter Weise geführt sind. Der Rahmentransporter (31) ist als hochliegender Hängeförderer ausgebildet, wobei die Spannrahmen (6-9) an der Förderbahn (32) hängend transportiert werden. Die gezeigte Anordnung kann auch umgedreht sein.

Die Übergabe der Spannrahmen (6-9) von den Fördereinrichtungen (25,31) an die Rahmenmagazine (16-19) und zurück kann in beliebig geeigneter Weise bewirkt werden. An den Magazinplätzen ist hierfür z.B. jeweils ein Rahmenhalter (23), z.B. eine formschlüssig aufnehmende Stützschiene, vorhanden, die je nach Drehstellung des Rahmenmagazins (16-19) mit der Förderbahn (26), insbesondere der Schiene (27), des Rahmenförderers (25) und der Förderbahn (32), insbesondere der Schiene (33), des Rahmentransporters (31) fluchtet und ein Einschieben des Spannrahmens (6,9), z.B. seines Laufwerks (28,34), erlaubt.

Der Rahmenhalter (23) und die Förderbahn (26) haben eine übereinstimmende Form, insbesondere Schienenform mit Führungsspuren (50,51). An den Rahmenmagazinen (16-19) können steuerbare Schienenfixierungen (38) zur Positionierung und Sicherung der fluchtenden Stellung von Rahmenhalter (23) und Förderbahn (26) angeordnet sein.

Die Rahmenmagazine (16-19) weisen ferner an den Magazinplätzen jeweils eine steuerbare Verriegelungseinrichtung (24) auf, die den aufgenommenen Spannrahmen (6-9) zusätzlich fixiert und für einen Abtransport wieder freigibt. Der Spannrahmen (6-9) kann insbesondere in liegender Position gesichert und lagetreu gehalten werden. Zudem wird die Übergabe- und Übernahmeposition gegenüber der Förderbahn (26,32) definiert.

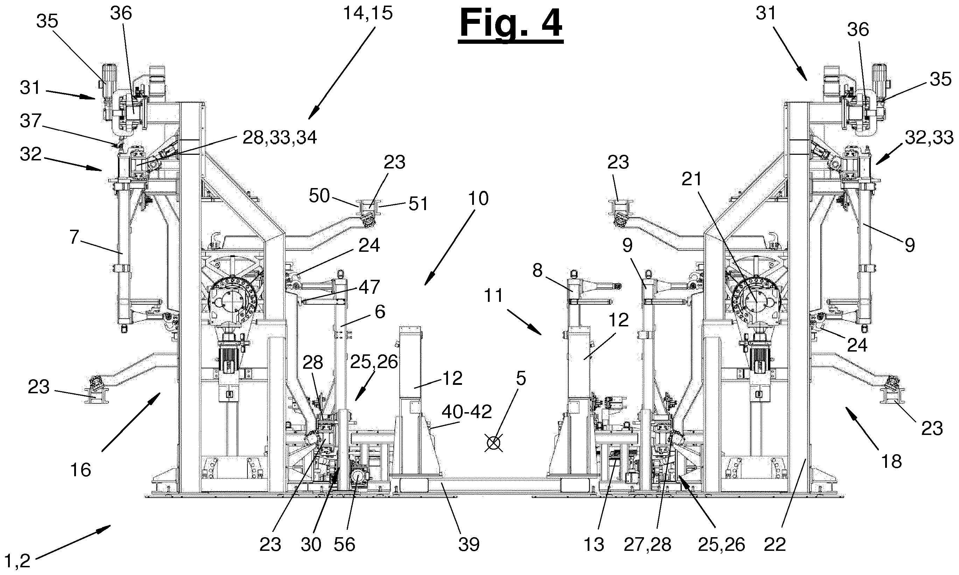

Die in Figur 4, 7 und 8 gezeigte Verriegelungseinrichtung (24) wird von Riegelelementen (45,46) am Rahmenmagazin (16-19) und am Spannrahmen (6-9) gebildet, die formschlüssig ineinander greifen können. Die Riegelelemente (45) am Rahmenmagazin (16-19) sind steuerbar angetrieben. Sie können den Spannrahmen (6-9) bei der Verriegelung ggf. ein Stück bewegen. Die Riegelelemente (45) sind z.B. als schwenkbare Greifer ausgebildet. Diese treten mit bolzen- oder rollenförmigen Riegelelementen (46) am Spannrahmen (6-9) in Eingriff, die dort z.B. an quer abstehenden Auslegern angeordnet sind. Die Anordnung kann auch umgedreht sein.

Ferner sind Medienkupplungen (47) an den Magazinplätzen zwischen den Rahmenmagazinen (16-19) und den aufgenommenen Spannrahmen (6-9) vorhanden. Sie bestehen z.B. jeweils aus einem Kupplungselement (48) am Magazinplatz und einem Kupplungselement (49) am Spannrahmen (6-9), die einzeln oder mehrfach vorhanden und randseitig angeordnet sind. Die Kupplungselemente (48,49) können außerdem als mechanische Absteckung für die Spannrahmen (6-9) am Magazinplatz dienen.

Die Medienkupplungen (47) können Betriebsmittel, z.B. Fluide, Leistungs- und/oder Signalströme, übertragen. Dadurch können bewegliche Spann-, Positionier- und Stützmittel der Spannrahmen (6-9) aktiviert und in ihrer Soll-Position arretiert und gesichert werden. Dies verhindert unkontrollierte Eigenbewegungen und hieraus resultierende Kollisionsgefahren, insbesondere bei einer liegenden Spannrahmenlage am Rahmenmagazin (16-19). Über die Signalströme oder auf andere Weise können Daten ausgetauscht werde. Dies ist zu Steuer- und Identifizierungszwecken von Vorteil. Die Steuerung weiß stets, wo sich welcher Spannrahmen (6-9) befindet.

Die Medienkupplungen (47) werden in der Aufnahmeposition am Magazinplatz von der Verriegelungseinrichtung (24) bei deren Verriegelungsbewegung automatisch geöffnet und geschlossen.

Die Speichereinrichtung (15) kann die vorerwähnten einen oder mehreren weiteren Speicherplätze (20) für einen oder mehrere Spannrahmen (6-9) aufweisen. In den gezeigten Ausführungsbeispielen erstrecken sich die Förderbahnen (26,32) über ein oder mehrere zugeordnete Rahmenmagazine (16-19) an einem oder beiden Enden hinaus. An diesem Bahnenüberstand wird jeweils ein solcher Speicherplatz (20) gebildet. Hier können jeweils ein oder mehrere Spannrahmen (6-9) außerhalb der Rahmenmagazine (16-19) geparkt werden.

Solche Bahnüberstände und Speicherplätze (20) können an allen Förderbahnen (26,32) vorhanden sein. Falls es der Platzbedarf der Bearbeitungsanlage (1) und der Nachbarstation oder andere Gründe erfordern, kann die Zahl und Anordnung der Speicherplätze (20) reduziert werden. In den gezeigten Ausführungsbeispielen sind nur die Förderbahnen (32) der Rahmentransporter (31) beidendig zur Bildung von Speicherplätzen (20) verlängert.

Ein oder mehrere weitere Speicherplätze (20) können auch an der Förderbahn (32) des Rahmentransporters (31) im Freiraum zwischen den längs der Transferlinie (5) beabstandeten jeweiligen Rahmenmagazinen (16,17,18,19) gebildet werden.

Der Rahmentransporter (31) dient dem Rahmentausch zwischen den angeschlossenen Rahmenmagazinen (16-19) und ggf. den weiteren Speicherplätzen (20). Der Rahmentransporter (31) ist vorzugsweise nicht an die Arbeitsstelle (10) angebunden.

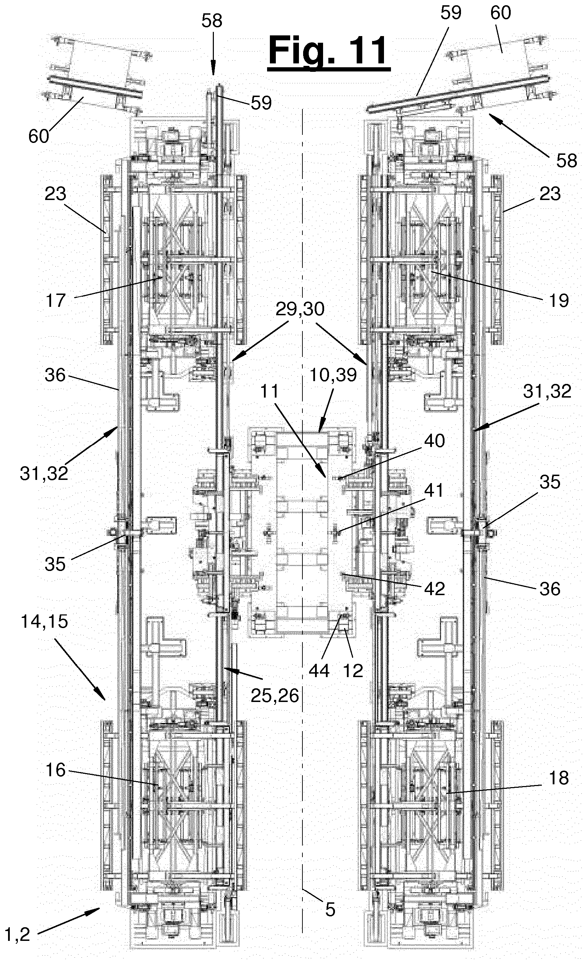

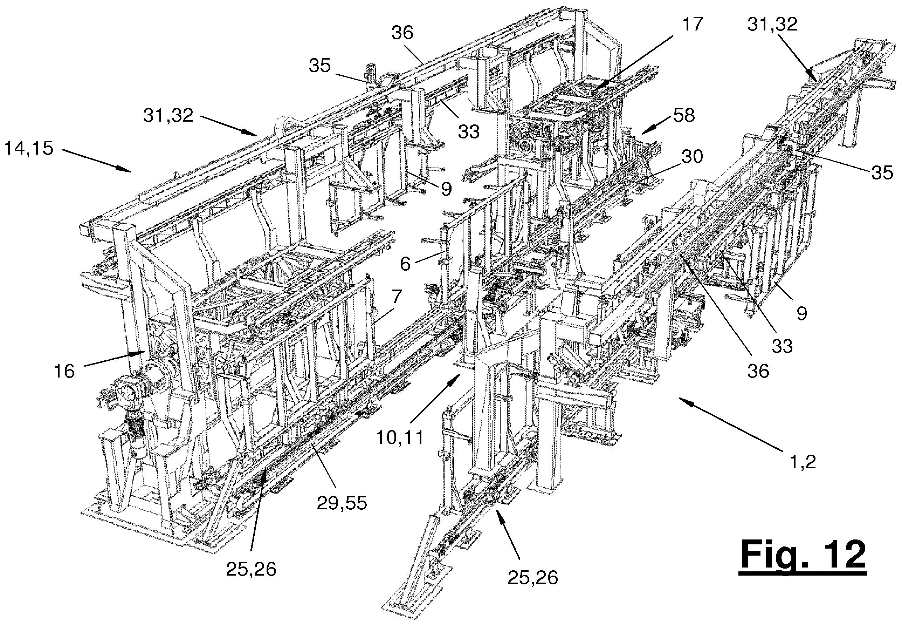

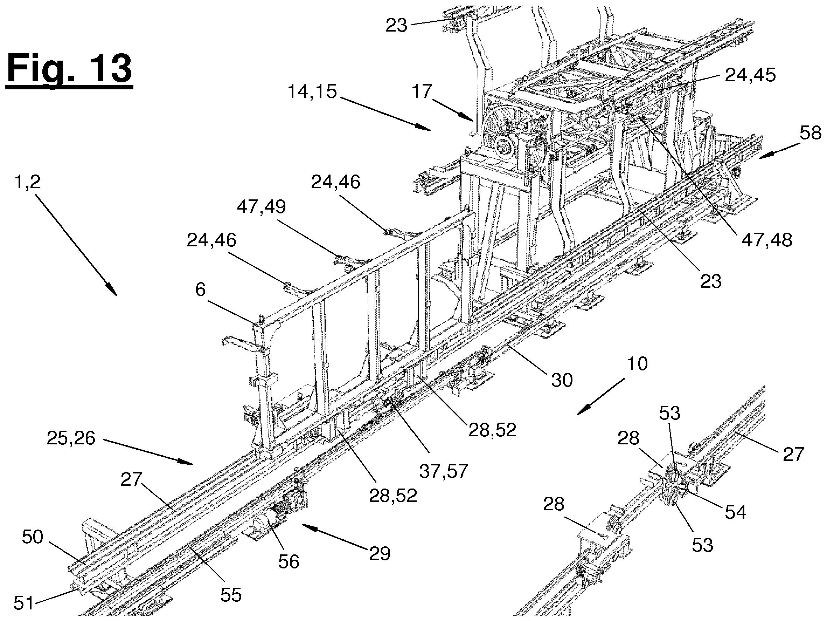

Figur 11 bis 14 zeigen eine Variante der Bearbeitungsstation (2), die eine Ausschleusvorrichtung (58) aufweist und die ggf. ohne äußere Speicherplätze (20) auskommt. Sie zeigen außerdem eine andere Ausbildung und Anordnung der Medienkuppplung (47). Bei Figur 12 sind zur besseren Übersicht die rechten Rahmenmagazine (18,19) nicht dargestellt. Die Detaildarstellung von Figur 13 ist ebenfalls einseitig und abstrahiert.

Ansonsten kann die Variante mit den vorbeschriebenen Ausführungsbeispielen von Figur 1 bis 10 übereinstimmen. Dies gilt insbesondere für die Gestaltung der Rahmenförderer (25) und Rahmentransporter (31) sowie der Positioniereinrichtung (11) und der Zustellvorrichtung (13). Figur 11 bis 14 zeigen hierzu die Details des einzelnen Fördermittels (29) mit dem Schleppholm (55) nebst Antrieb (56) und Führungsbahn (30) sowie des einzelnen Schleppwagens (35) mit Führungsbahn (36). Die Führungsbahnen (30,36) sind jeweils getrennt von den Förderbahnen (26,32) angeordnet, welche wiederum jeweils als einzelne Schienen (27,33) für die rahmenseitigen Laufwerke (28) mit Gabelarmen (52) und Stützrollen (53,54) ausgebildet sind. Die Positioniereinrichtung (11) ist mit den vorbeschriebenen Positionierelementen (41-43) und Fixiermitteln (44) ausgestattet.

Die Ausschleusvorrichtung (58) dient zum Ein- und Ausschleusen von Spannrahmen (6-9) und kann einfach oder mehrfach vorhanden sein. Sie kann an einer oder beiden Förderbahnen (26) an einem oder beiden Stirnenden anschließen. Sie kann alternativ oder zusätzlich mit der Rückführ-Förderbahn zusammenwirken.

Die Ausschleusvorrichtung (58) besitzt eine bewegliche und bevorzugt steuerbar angetriebene Ausschleusbahn (59), z.B. in Form eines Schienenstücks, die einerseits zum Spannrahmentransport fluchtend mit der Förderbahn (26,32) ausgerichtet und andererseits in eine z.B. schräge Wechselposition zu einem mobilen Ausschleuswagen (60) bewegt, insbesondere geschwenkt, werden kann. Die Ausschleusbahn (59) ist mittels eines Lenkergetriebes schwenkbar am Magazingestell (22) angeordnet und kann dadurch platzsparend zwischen den in Figur 11 gezeigten Positionen schwenken.

Der Ausschleuswagen (60) kann in der schrägen Schwenkstellung an der Ausschleusbahn (59) andocken. Er ist bevorzugt flurgebunden und höhenverstellbar. Er weist ebenfalls ein Bahn- oder Schienenstück zur Aufnahme eines Spannrahmens (6-9) bzw. seines Laufwerks (28) auf. Er kann manuell bewegbar oder steuerbar angetrieben sein.

Die Laufwerksbreite ist kleiner als die Spannrahmenbreite. Die Schienenstücke der Ausschleusvorrichtung (58) können daher kurz und platzsparend ausgebildet sein. Entsprechendes gilt auch für die vorbeschriebene Zustellvorrichtung (13) und ihr Bahn- oder Schienenstück.

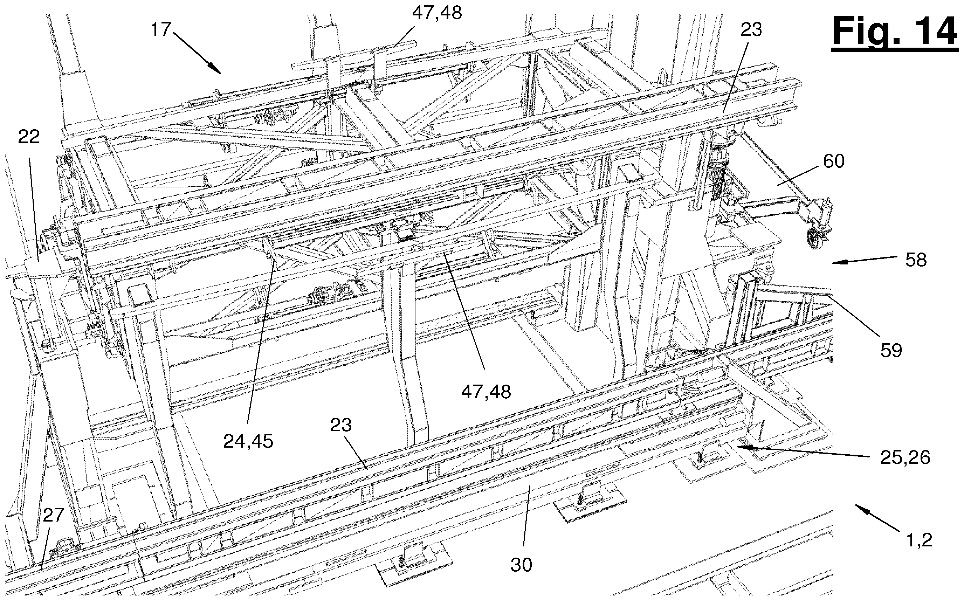

Die Medienkupplungen (47) sind bei der Variante anders ausgebildet und angeordnet. Wie Figur 13 und 14 verdeutlichen, sind die Kupplungselemente (48,49) von den mechanischen Absteckungen getrennt und zentral an den Spannrahmen (6-9) und an den Magazinplätzen der Rahmenmagazine (16-19) angeordnet. Die Kupplungselemente (48,49) befinden sich dabei jeweils an einem Ausleger der Spannrahmen (6-9) und der Magazinplätze.

Abwandlungen der gezeigten und beschriebenen Ausführungsformen sind in verschiedener Weise möglich. Insbesondere können die Merkmale der Ausführungsbeispiele und der genannten Varianten in beliebiger Weise miteinander kombiniert und ggf. auch vertauscht werden.

Die Rahmenmagazine (16-19) können eine andere Ausbildung und Anordnung haben. Sie können z.B. als Drehtische mit mehreren Magazinplätzen und einer aufrechten oder stehenden Drehachse ausgebildet sein, z.B. entsprechend der EP 1 858 750 B1. Auch bei einer solchen Magazinausbildung empfiehlt sich eine gerade Zahl von Magazinplätzen.

Ferner können in Abwandlung der gezeigten Ausführungsformen Rahmenmagazine (16-19), Rahmenförderer (25) und Rahmentransporter (31) sowie Zustell- und Positioniervorrichtung (11,13) nur an einer Seite der Transferlinie (5) angeordnet sein. Zudem ist es möglich, statt der gezeigten paarweisen Anordnung von Rahmenmagazinen (16-19) beidseits der zwischen ihnen liegenden Arbeitsstelle (10) eine andere Magazinanordnung zu wählen. Hierbei kann z.B. nur jeweils ein Rahmenmagazin einer Arbeitsstelle (10) zugeordnet sein. Andererseits kann die Zahl der einer Arbeitsstelle (10) an einer Seite zugeordneten Rahmenmagazine auch größer als zwei sein.

Konstruktive Änderungen sind auch hinsichtlich des Rahmenförderers (25) und des Rahmentransporters (31) möglich. Die Spannrahmen (6-9) können auf oder an einem Fördermittel (29,35) gehalten und abgestützt sein, wobei sie z.B. mit einer geeigneten Zuführvorrichtung aufgeladen und abgeladen werden. Die Spannrahmen (6-9) sind dann nicht mehr eigenständig geführt, sodass die jeweilige Förderbahn (26,32) sich ggf. auf die Führungsbahn (30,36) des Rahmenförderers (25) und/oder Rahmentransporters (31) reduziert.

Je nach Magazinausbildung können der Rahmenförderer (25) und der Rahmentransporter (31) in gleicher Höhe relativ zu dem oder den jeweils angebundenen Rahmenmagazinen (16-19) angeordnet sein. Dies kann z.B. bei einer Magazinausbildung in Form von Drehtischen oder aufrechten Säulen der Fall sein.

Ein Einsatz ist ferner mit allen vorgenannten Varianten von Rahmenmagazinen (16-19) mit oder ohne Rahmentransporter (31) möglich.

Die genannten Abwandlungen können ansonsten die gleiche oder entsprechende Ausbildung wie die gezeigten Ausführungsbeispiele haben.

### BEZUGSZEICHENLISTE

- 1: Bearbeitungsanlage
- 2: Bearbeitungsstation, Fügestation, Geostation
- 3: Bearbeitungsvorrichtung, Roboter
- 4: Werkstück, Karosserieteil
- 5: Transferlinie
- 6: Spannrahmen
- 7: Spannrahmen
- 8: Spannrahmen
- 9: Spannrahmen
- 10: Arbeitsstelle
- 11: Positioniereinrichtung
- 12: Gestell
- 13: Zustellvorrichtung
- 14: Wechselvorrichtung für Spannrahmen
- 15: Speichereinrichtung
- 16: Rahmenmagazin, Trommelmagazin
- 17: Rahmenmagazin, Trommelmagazin
- 18: Rahmenmagazin, Trommelmagazin
- 19: Rahmenmagazin, Trommelmagazin
- 20: Speicherplatz
- 21: Drehachse
- 22: Magazingestell
- 23: Rahmenhalter, Stützschiene
- 24: Verriegelungseinrichtung
- 25: Rahmenförderer, Hauptförderer
- 26: Förderbahn, Führung, Schienenführung
- 27: Führungsmittel, Schiene
- 28: Führungsmittel, Laufwerk
- 29: Fördermittel, Schleppwagen
- 30: Führungsbahn
- 31: Rahmentransporter, Nebenförderer, Hängeförderer
- 32: Förderbahn, Führung, Schienenführung
- 33: Führungsmittel, Schiene
- 34: Führungsmittel, Laufwerk
- 35: Fördermittel, Schleppwagen
- 36: Führungsbahn
- 37: Kupplung
- 38: Schienenfixierung
- 39: Vorpositionierer
- 40: Positionierelement, Rollenbock
- 41: Positionierelement, Rollenbock
- 42: Positionierelement, Rollenbock
- 43: Positionierelement, Schwert
- 44: Fixiermittel, Spanner
- 45: Riegelelement, Greifer
- 46: Riegelelement, Bolzen
- 47: Medienkupplung
- 48: Kupplungselement an Magazin
- 49: Kupplungselement an Spannrahmen
- 50: Führungsspur oben
- 51: Führungsspur unten
- 52: Stützarm, Gabelarm
- 53: Stützrolle vertikal
- 54: Stützrolle horizontal
- 55: Holm, Schleppholm
- 56: Antrieb
- 57: Kupplung, Mitnehmer
- 58: Ausschleusvorrichtung
- 59: Ausschleusbahn, Schienenstück
- 60: Ausschleuswagen

## Patentansprüche

1. Wechselvorrichtung für Spannrahmen (6-9) an einer Bearbeitungsstation (2), insbesondere Fügestation, für Karosserieteile (4), wobei die Wechselvorrichtung (14) eine Speichereinrichtung (15) für die Spannrahmen (6-9) mit mehreren gesteuert drehbaren und als Trommelmagazine mit einer liegenden Drehachse (21) ausgebildeten Rahmenmagazinen (16-19) und einen Rahmenförderer (25) aufweist, der für den Transport der Spannrahmen (6-9) zwischen Rahmenmagazinen (16-19) und einer Arbeitsstelle (10) der Bearbeitungsstation (2) vorgesehen und ausgebildet ist, wobei die Wechselvorrichtung (14) einen weiteren Rahmentransporter (31) aufweist, der ebenfalls mit den vom Rahmenförderer (25) bedienten Rahmenmagazinen (16-19) verbunden ist, **dadurch gekennzeichnet, dass** die Spannrahmen (6-9) an den Rahmenmagazinen (16-19) gesichert aufgenommen sind, wobei die Rahmenmagazine (16-19) eine steuerbare Verriegelungseinrichtung (24) und eine Medienkupplung (47) für die Spannrahmen (6-9) aufweisen, wobei mittels der Verriegelungseinrichtung (24) die Medienkupplung (47) automatisch geöffnet oder geschlossen wird.

2. Wechselvorrichtung nach Anspruch 1, **dadurch gekennzeichnet, dass** der Rahmenförderer (25) und der Rahmentransporter (31) jeweils eine Förderbahn (26,32) und ein angetriebenes, steuerbares Fördermittel (29,35) für die Spannrahmen (6-9) aufweisen, wobei eine Förderbahn (26,32) ein Führungsmittel (27,33) für die Spannrahmen (6-9) und eine davon getrennte Führungsbahn (30,36) für ein Fördermittel (29,35) aufweist, wobei durch die getrennte Führung von Spannrahmen (6-9) und Fördermitteln (29,35) die Fördermittel (29,35) sich unabhängig von den Spannrahmen (6-9) entlang ihrer jeweiligen Führungsbahn (30,36) bewegen können.

3. Wechselvorrichtung Anspruch 1 oder 2, **dadurch gekennzeichnet, dass** ein Fördermittel (29,35) als steuerbarer Schleppwagen oder als geführter Holm (55) mit einem stationären steuerbaren Antrieb (56) ausgebildet ist.

4. Wechselvorrichtung nach Anspruch 3, **dadurch gekennzeichnet, dass** ein Fördermittel (35) des Rahmentransporters (31) als steuerbarer Schleppwagen ausgebildet ist und ein Fördermittel (29) des Rahmenförderers (25) als geführter Holm (55) mit einem stationären steuerbaren Antrieb (56) ausgebildet ist.

5. Wechselvorrichtung nach einem der vorhergehenden Ansprüche, **dadurch gekennzeichnet, dass** der Rahmenförderer (25) und/oder der Rahmentransporter (31) mehrere, insbesondere zwei separate und eigenständig bewegliche sowie steuerbare Fördermittel (29,35) aufweist.

6. Wechselvorrichtung nach einem der vorhergehenden Ansprüche, **dadurch gekennzeichnet, dass** die Förderbahnen (26,32) des Rahmenförderers (25) und des zugeordneten Rahmentransporters (31) in unterschiedlicher Höhe an ein Rahmenmagazin (16-19), insbesondere an dessen Unterseite und Oberseite, angebunden sind.

7. Wechselvorrichtung nach einem der vorhergehenden Ansprüche, **dadurch gekennzeichnet, dass** die Wechselvorrichtung (14) eine Zustellvorrichtung (13) mit einem einzelnen Bahn- oder Schienenstück für den Transport eines Spannrahmens (6-9) vom Rahmenförderer (25) zur Arbeitsstelle (10) aufweist, wobei die Wechselvorrichtung (14) eine Positioniereinrichtung (11) für die stationäre Positionierung und Abstützung sowie ggf. die Medienversorgung eines Spannrahmens (6-9) an der Arbeitsstelle (10) aufweist.

8. Bearbeitungsstation, insbesondere Fügestation, für Karosserieteile (4) mit einer Wechselvorrichtung für Spannrahmen (6-9), die eine Speichereinrichtung (15) für die Spannrahmen (6-9) mit mehreren beweglichen, insbesondere drehbaren Rahmenmagazinen (16-19) und einen Rahmenförderer (25) aufweist, der für den Transport der Spannrahmen (6-9) zwischen Rahmenmagazinen (16-19) und einer Arbeitsstelle (10) der Fügestation (2) vorgesehen und ausgebildet ist, **dadurch gekennzeichnet, dass** die Wechselvorrichtung (14) nach mindestens einem der Ansprüche 1 bis 7 ausgebildet ist.

9. Verfahren zum Wechseln von Spannrahmen (6-9) für Karosserieteile (4) an einer Bearbeitungsstation (2), insbesondere Fügestation, wobei die Spannrahmen (6-9) in einer Speichereinrichtung (15) mit mehreren gesteuert drehbaren und als Trommelmagazine mit einer liegenden Drehachse (21) ausgebildeten Rahmenmagazinen (16-19) gespeichert und mittels eines Rahmenförderers (25) zwischen den Rahmenmagazinen (16-19) und einer Arbeitsstelle (10) der Bearbeitungsstation (2) transportiert und gewechselt werden, wobei die Spannrahmen (6-9) mittels eines weiteren Rahmentransporters (31) zwischen den vom Rahmenförderer (25) bedienten Rahmenmagazinen (16-19) transportiert und gewechselt werden, **dadurch gekennzeichnet, dass** die Spannrahmen (6-9) an den Rahmenmagazinen (16-19) gesichert aufgenommen werden, wobei die Spannrahmen (6-9) an den Rahmenmagazinen (16-19) mittels einer steuerbaren Verriegelungseinrichtung (24) und einer Medienkupplung (47) gesichert aufgenommen werden, wobei mittels der Verriegelungseinrichtung (24) die Medienkupplung (47) automatisch geöffnet oder geschlossen wird.

10. Verfahren nach Anspruch 9, **dadurch gekennzeichnet, dass** mittels der Medienkupplung Betriebsmittel, insbesondere Fluide, und Daten zwischen dem Rahmenmagazin und dem jeweiligen Spannrahmen übertragen werden.

11. Verfahren nach Anspruch 9 oder 10, **dadurch gekennzeichnet, dass** die Spannrahmen (6-9) beim Transport an einer Förderbahn (26,32) mit einer einzelnen Schiene (27,33) kippsicher geführt werden.

12. Verfahren nach Anspruch 9, 10 oder 11, **dadurch gekennzeichnet, dass** zwei Spannrahmen (6-9) beim Transport an einer Förderbahn (26,32) von einem getrennt geführten (30), an- und abgekuppelbaren (37,57) Schleppholm (55) gemeinsam bewegt werden.

13. Verfahren nach einem der Ansprüche 9 bis 12, **dadurch gekennzeichnet, dass** die Spannrahmen (6-9) an der Arbeitsstelle (10) von einer Zustellvorrichtung (13) mit einem einzelnen Bahn- oder Schienenstück zugestellt werden.

14. Verfahren nach einem der Ansprüche 9 bis 13, **dadurch gekennzeichnet, dass** die Spannrahmen (6-9) an der Arbeitsstelle (10) mittels einer Positioniereinrichtung (11) mit mehreren Positionierelementen (40-43), insbesondere Rollböcken und einem Schwert, in den drei Raumrichtungen x, y, z stationär positioniert und abgestützt werden.

## Claims

1. Changeover apparatus for clamping frames (6-9) at a processing station (2), in particular joining station, for body parts (4), wherein the changeover apparatus (14) has a storage device (15) for the clamping frames (6-9) with a plurality of frame magazines (16-19), which are rotatable in a controlled manner and are designed as drum magazines with a horizontal axis of rotation (21), and a frame conveyor (25) which is provided and designed for transporting the clamping frames (6-9) between frame magazines (16-19) and a workplace (10) of the processing station (2), wherein the changeover apparatus (14) has a further frame transporter (31) which is likewise connected to the frame magazines (16-19) served by the frame conveyor (25), **characterized in that** the clamping frames (6-9) are accommodated in a manner secured on the frame magazines (16-19), wherein the frame magazines (16-19) have a controllable locking device (24) and a media coupling (47) for the clamping frames (6-9), wherein the media coupling (47) is automatically opened or closed by means of the locking device (24) .

2. Changeover apparatus according to Claim 1, **characterized in that** the frame conveyor (25) and the frame transporter (31) each have a conveyor track (26, 32) and a driven, controllable conveyor means (29, 35) for the clamping frames (6-9), wherein a conveyor track (26, 32) has a guide means (27, 33) for the clamping frames (6-9) and a guide track (30, 36), which is separate therefrom, for a conveyor means (29, 35), wherein the separate guiding of clamping frames (6-9) and conveyor means (29, 35) makes it possible for the conveyor means (29, 35) to move along their respective guide track (30, 36) independently of the clamping frames (6-9).

3. Changeover apparatus according to Claim 1 or 2, **characterized in that** a conveyor means (29, 35) is designed as a controllable tow car or as a guided spar (55) with a stationary controllable drive (56).

4. Changeover apparatus according to Claim 3, **characterized in that** a conveyor means (35) of the frame transporter (31) is designed as a controllable tow car, and a conveyor means (29) of the frame conveyor (25) is designed as a guided spar (55) with a stationary controllable drive (56).

5. Changeover apparatus according to one of the preceding claims, **characterized in that** the frame conveyor (25) and/or the frame transporter (31) has a plurality of, in particular two, separate and independently movable and controllable conveyor means (29, 35).

6. Changeover apparatus according to one of the preceding claims, **characterized in that** the conveyor tracks (26, 32) of the frame conveyor (25) and of the associated frame transporter (31) are attached at a different height to a frame magazine (16-19), in particular to the lower side and upper side thereof.

7. Changeover apparatus according to one of the preceding claims, **characterized in that** the changeover apparatus (14) has a feeding apparatus (13) with an individual track or rail section for transporting a clamping frame (6-9) from the frame conveyor (25) to the workplace (10), wherein the changeover apparatus (14) has a positioning device (11) for the stationary positioning and support and optionally for the supply of media to a clamping frame (6-9) at the workplace (10).

8. Processing station, in particular joining station, for body parts (4), with a changeover apparatus for clamping frames (6-9), which changeover apparatus has a storage device (15) for the clamping frames (6-9) with a plurality of movable, in particular rotatable frame magazines (16-19), and a frame conveyor (25) which is provided and designed for transporting the clamping frames (6-9) between frame magazines (16-19) and a workplace (10) of the joining station (2), **characterized in that** the changeover apparatus (14) is designed according to at least one of Claims 1 to 7.

9. Method for changing over clamping frames (6-9) for body parts (4) at a processing station (2), in particular joining station, wherein the clamping frames (6-9) are stored in a storage device (15) having a plurality of frame magazines (16-19), which are rotatable in a controlled manner and are designed as drum magazines with a horizontal axis of rotation (21), and are transported and changed over by means of a frame conveyor (25) between the frame magazines (16-19) and a workplace (10) of the processing station (2), wherein the clamping frames (6-9) are transported and changed over by means of a further frame transporter (31) between the frame magazines (16-19) served by the frame conveyor (25), **characterized in that** the clamping frames (6-9) are accommodated in a manner secured on the frame magazines (16-19), wherein the clamping frames (6-9) are accommodated in a manner secured on the frame magazines (16-19) by means of a controllable locking device (24) and a media coupling (47), wherein the media coupling (47) is automatically opened or closed by means of the locking device (24).

10. Method according to Claim 9, **characterized in that** operating means, in particular fluids, and data are transferred between the frame magazine and the respective clamping frame by means of the media coupling.

11. Method according to Claim 9 or 10, **characterized in that** the clamping frames (6-9) are guided in a manner secured against tilting during transportation on a conveyor track (26, 32) with an individual rail (27, 33).

12. Method according to Claim 9, 10 or 11, **characterized in that** two clamping frames (6-9) are jointly moved during transportation on a conveyor track (26, 32) by a tow spar (55) which is separately guided (30) and can be coupled and uncoupled (37, 57).

13. Method according to one of Claims 9 to 12, **characterized in that** the clamping frames (6-9) are fed to the workplace (10) by a feeding apparatus (13) with an individual track or rail section.

14. Method according to one of Claims 9 to 13, **characterized in that** the clamping frames (6-9) are positioned and supported in a stationary manner in the three directions in space x, y, z at the workplace (10) by means of a positioning device (11) with a plurality of positioning elements (40-43), in particular roller carriers and a strut.

## Revendications

1. Dispositif de changement de cadres de serrage (6-9) au niveau d'une station d'usinage (2), en particulier une station d'assemblage, pour des pièces de carrosserie (4), le dispositif de changement (14) comprenant un moyen de stockage (15) pour les cadres de serrage (6-9) comportant plusieurs magasins pour cadres (16-19) pouvant tourner de manière commandée et réalisés sous forme de magasins à tambour présentant un axe de rotation (21) horizontal, et un convoyeur de cadres (25), qui est prévu et réalisé pour le transport des cadres de serrage (6-9) entre des magasins pour cadres (16-19) et un emplacement de travail (10) de la station d'usinage (2), le dispositif de changement (14) comprenant un autre transporteur de cadres (31) qui est également relié aux magasins pour cadres (16-19) desservis par le convoyeur de cadres (25), **caractérisé en ce que** les cadres de serrage (6-9) sont logés de manière immobilisée au niveau des magasins pour cadres (16-19), les magasins pour cadres (16-19) comprenant un dispositif de verrouillage (24) pouvant être commandé et un raccord pour milieux (47) pour les cadres de serrage (6-9), le raccord pour milieux (47) étant ouvert ou fermé automatiquement au moyen du dispositif de verrouillage (24).

2. Dispositif de changement selon la revendication 1, **caractérisé en ce que** le convoyeur de cadres (25) et le transporteur de cadres (31) comprennent respectivement une voie de convoyage (26, 32) et un moyen de convoyage (29, 35) entraîné pouvant être commandé pour les cadres de serrage (6-9), une voie de convoyage (26, 32) comprenant un moyen de guidage (27, 33) pour les cadres de serrage (6-9) et une voie de guidage (30, 36), séparée de celui-ci, pour un moyen de convoyage (29, 35), les moyens de convoyage (29, 35) pouvant se déplacer indépendamment des cadres de serrage (6-9) le long de leur voie de guidage (30, 36) respective grâce au guidage séparé des cadres de serrage (6-9) et des moyens de convoyage (29, 35).

3. Dispositif de changement selon la revendication 1 ou 2, **caractérisé en ce qu'**un moyen de convoyage (29, 35) est réalisé sous forme de chariot de halage pouvant être commandé ou sous forme de traverse guidée (55) présentant un entraînement (56) fixe pouvant être commandé.

4. Dispositif de changement selon la revendication 3, **caractérisé en ce qu'**un moyen de convoyage (35) du transporteur de cadres (31) est réalisé sous forme de chariot de halage pouvant être commandé et un moyen de convoyage (29) du convoyeur de cadres (25) est réalisé sous forme de traverse guidée (55) présentant un entraînement (56) fixe pouvant être commandé.

5. Dispositif de changement selon l'une des revendications précédentes, **caractérisé en ce que** le convoyeur de cadres (25) et/ou le transporteur de cadres (31) comprend/comprennent plusieurs, en particulier deux moyens de convoyage (29, 35) séparés et mobiles de manière autonome et pouvant être commandés.

6. Dispositif de changement selon l'une des revendications précédentes, **caractérisé en ce que** les voies de convoyage (26, 32) du convoyeur de cadres (25) et du transporteur de cadres (31) associé sont reliées à différentes hauteurs à un magasin pour cadres (16-19), en particulier au niveau de son côté inférieur et de son côté supérieur.

7. Dispositif de changement selon l'une des revendications précédentes, **caractérisé en ce que** le dispositif de changement (14) comprend un dispositif d'avancée (13) présentant un segment de voie ou de rail individuel pour le transport d'un cadre de serrage (6-9) à partir du convoyeur de cadres (25) jusqu'à l'emplacement de travail (10), le dispositif de changement (14) comprenant un dispositif de positionnement (11) pour le positionnement fixe et le support ainsi qu'éventuellement l'alimentation en milieux d'un cadre de serrage (6-9) au niveau de l'emplacement de travail (10).

8. Station d'usinage, en particulier station d'assemblage, pour des pièces de carrosserie (4) comportant un dispositif de changement de cadres de serrage (6-9), qui comprend un moyen de stockage (15) pour les cadres de serrage (6-9) comportant plusieurs magasins pour cadres (16-19) mobiles, en particulier rotatifs, et un convoyeur de cadres (25) qui est prévu et réalisé pour le transport des cadres de serrage (6-9) entre les magasins pour cadres (16-19) et un emplacement de travail (10) de la station d'assemblage (2), **caractérisé en ce que** le dispositif de changement (14) est réalisé selon au moins l'une des revendications 1 à 7.

9. Procédé de changement de cadres de serrage (6-9) pour pièces de carrosserie (4) au niveau d'une station d'usinage (2), en particulier une station d'assemblage, les cadres de serrage (6-9) étant stockés dans un moyen de stockage (15) comportant plusieurs magasins pour cadres (16-19) pouvant tourner de manière commandée et réalisés sous forme de magasins à tambour présentant un axe de rotation (21) horizontal et étant transportés et changés au moyen d'un convoyeur de cadres (25) entre les magasins pour cadres (16-19) et un emplacement de travail (10) de la station d'usinage (2), les cadres de serrage (6-9) étant transportés et changés au moyen d'un autre transporteur de cadres (31) entre les magasins pour cadres (16-19) desservis par le convoyeur de cadres (25), **caractérisé en ce que** les cadres de serrage (6-9) sont logés de manière immobilisée au niveau des magasins pour cadres (16-19), les cadres de serrage (6-9) étant logés de manière immobilisée au niveau des magasins pour cadres (16-19) au moyen d'un dispositif de verrouillage (24) pouvant être commandé et d'un raccord pour milieux (47), le raccord pour milieux (47) étant ouvert ou fermé automatiquement au moyen du dispositif de verrouillage (24) .

10. Procédé selon la revendication 9, **caractérisé en ce que** des moyens de fonctionnement, en particulier des fluides, et des données sont transmis entre le magasin pour cadres et le cadre de serrage respectif au moyen du raccord pour milieux.

11. Procédé selon la revendication 9 ou 10, **caractérisé en ce que** les cadres de serrage (6-9), lors du transport sur une voie de convoyage (26, 32), sont guidés de manière à empêcher un renversement à l'aide d'un rail individuel (27, 33).

12. Procédé selon la revendication 9, 10 ou 11, **caractérisé en ce que** deux cadres de serrage (6-9), lors du transport sur une voie de convoyage (26, 32), sont déplacés conjointement par une traverse de halage (55) guidée séparément (30) et pouvant être accouplée et désaccouplée (37, 57).

13. Procédé selon l'une des revendications 9 à 12, **caractérisé en ce que** les cadres de serrage (6-9) sont, au niveau d'un emplacement de travail (10), avancés par un dispositif d'avancement (13) présentant un segment de voie ou de rail individuel.

14. Procédé selon l'une des revendications 9 à 13, **caractérisé en ce que** les cadres de serrage (6-9) sont, au niveau de l'emplacement de travail (10), positionnés et supportés de manière fixe dans les trois directions spatiales x, y, z au moyen d'un dispositif de positionnement (11) comportant plusieurs éléments de positionnement (40-43), en particulier des transporteurs à galets et une lame.
